(19) Europäisches Patentamt / European Patent Office / Office européen des brevets

(11) **EP 4 670 972 A1**

(12) **EUROPEAN PATENT APPLICATION**
published in accordance with Art. 153(4) EPC

(43) Date of publication:
**31.12.2025 Bulletin 2026/01**

(21) Application number: **24760437.4**

(22) Date of filing: **22.02.2024**

(51) International Patent Classification (IPC):
**B32B 27/00** (2006.01) **B32B 27/20** (2006.01)
**B32B 27/30** (2006.01)

(52) Cooperative Patent Classification (CPC):
**B32B 27/00; B32B 27/20; B32B 27/30**

(86) International application number:
**PCT/JP2024/006511**

(87) International publication number:
**WO 2024/177139 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023 JP 2023027072**

(71) Applicant: **Yupo Corporation**
**Tokyo 101-0062 (JP)**

(72) Inventors:
• **IMAI, Hideyuki**
**Kamisu-shi, Ibaraki 314-0102 (JP)**
• **IKARASHI, Takuya**
**Kamisu-shi, Ibaraki 314-0102 (JP)**

(74) Representative: **Zimmermann & Partner Patentanwälte mbB**
**P.O. Box 330 920**
**80069 München (DE)**

(54) **LAMINATE**

(57) Provided is a laminate that enhances the adhesiveness of the laminate to a container even if silicone is transferred from a protective layer side to a heat sealing layer side, and furthermore has transparency. The laminate is an in-mold label comprising a substrate layer, a heat sealing layer, and a coating layer, wherein the coating layer comprises thermoplastic resin particles and a (meth)acrylic acid-based copolymer, the thermoplastic resin particles have an average particle size of 0.01 to 0.80 µm, and the (meth)acrylic acid-based copolymer has a polar group.

EP 4 670 972 A1

## Description

Technical Field

The present invention relates to a laminate.

Background Art

An in-mold molding method includes a blow molding method and an injection molding method. The blow molding is a method of forming a resin container by placing a melted feedstock resin tube between split molds, and inflating the feedstock resin tube by the application of air pressure from inside. The injection molding method is a method of forming a resin container by injecting a feedstock resin between a cavity mold and a core mold. The blow molding method further includes a direct blow method and a stretch blow method. The direct blow method is a method of forming a resin container by heating a feedstock resin to a temperature equal to or higher than a melting point so that the feedstock resin is melted to form a parison, and inflating the parison in a mold by the application of air pressure. The stretch blow method is a method of forming a resin container by placing a preform formed from a feedstock resin in advance in a mold, and inflating the preform by the application of air pressure while stretching the preform with a rod around the softening point of the feedstock resin.

An in-mold label that is thermally fused through heat from molding to the surface of the resin container formed by blow molding as described above is used as a label for the resin container. For example, an in-mold label in which a heat-sensitive adhesive layer comprising an ethylene-vinyl acetate copolymer is laminated onto a polypropylene film is used for a container made of polyethylene (see, for example, Patent Literature 1).

An in-mold label has also been proposed which has a heat-sealable resin layer comprising a polyethylene-based resin on a substrate layer, wherein the heat-sealable resin layer is subjected to surface oxidation treatment to thereby enhance adhesiveness to polyethylene terephthalate (see, for example, Patent Literature 2).

After a printed layer is formed in an in-mold label by printing for product display or the like, scratches, stains, and the like of the printed layer may be prevented by disposing a protective layer on the printed layer. The protective layer is formed by coating with a coating solution called overprint varnish. The coating solution contains, for example, a curable resin such as an acrylic resin, a urethane resin, or an epoxy-based resin.

The coating solution may be supplemented with silicone for the purpose of, for example, enhancing the surface lubricity of an in-mold label. A sheet of an in-mold label is stored as a stack of cut pieces or wound and stored in a roll. When the coating solution is supplemented with silicone, silicone may be transferred from a protective layer of an in-mold label to the in-mold label stacked thereon. An in-mold label surface in contact with the protective layer is an attached surface to a container. An event has been confirmed in which this transfer of silicone reduces adhesiveness.

A technique of disposing an adhesive strength decrease-inhibiting layer containing a (meth)acrylic acid-based copolymer having a polar group on an outermost surface on a heat-sealable resin layer side of an in-mold label has been proposed in order to suppress reduction in adhesiveness of the in-mold label even if silicone is transferred from a protective layer side to the heat-sealable resin layer side (see, for example, Patent Literature 3).

Citation List

Patent Literature

Patent Literature 1: Japanese Patent Laid-Open No. 2004-136486
Patent Literature 2: Japanese Patent Laid-Open No. 2018-060185
Patent Literature 3: International Publication No. WO2020/067327

Summary of Invention

Technical Problem

However, even though reduction in adhesive force can be inhibited, Patent Literature 3 still has room to further improve original adhesive strength. An in-mold label may be required to have transparency from an aesthetic standpoint when combined with a container, and still has room for further research and development.

An object of the present invention is to provide a laminate that has adhesiveness to a resin container even if silicone is transferred from a protective layer side to a heat sealing layer side, and furthermore has transparency.

The present inventors have conducted diligent studies to attain the object and consequently completed the present invention by finding that a laminate comprises a substrate layer, a heat sealing layer, and a coating layer, and the coating layer contains a (meth)acrylic acid-based copolymer and thermoplastic resin particles having a predetermined average particle size, thereby enhancing the adhesiveness of the laminate to a resin container and furthermore providing transparency.

Specifically, the present invention is as follows.

[1] A laminate comprising a substrate layer, a heat sealing layer, and a coating layer, wherein

the coating layer comprises thermoplastic resin particles and a (meth)acrylic acid-based copolymer, wherein the thermoplastic resin particles have an average particle size of 0.01 to 0.80 $\mu$m, and wherein the (meth)acrylic acid-based copolymer has a polar group.

[2] The laminate according to [1], wherein the average particle size of the thermoplastic resin particles is 0.01 to 0.45 $\mu$m.

[3] The laminate according to [1] or [2], wherein a haze value is 60% or less.

[4] The laminate according to [1] or [2], wherein the (meth)acrylic acid-based copolymer has a primary to tertiary amino group.

[5] The laminate according to [1] or [2], wherein the (meth)acrylic acid-based copolymer has a melting point of lower than 60°C or has no melting point.

[6] The laminate according to [1], wherein

the laminate is a label that is used by adhering to a resin container which is a stretch blow-molded body, wherein an absolute value of an area dimension change rate at 80°C is 1% or less, and a tack force at 80°C is 0.8 N/cm$^2$ or less.

[7] The laminate according to [6], wherein a tack force at 90°C is less than 1.2 N/cm$^2$.

[8] The laminate according to [6] or [7], wherein a fusion heat rate at 80°C of a heat sealing resin in the heat sealing layer is 80% or less.

[9] The laminate according to [6] or [7], wherein the heat sealing layer comprises a first heat sealing resin and a second heat sealing resin,

a melting point of the first heat sealing resin is 75 to 85°C, and a melting point of the second heat sealing resin is 95 to 105°C.

Advantageous Effects of Invention

The present invention can provide a laminate that has adhesiveness to a resin container even if silicone is transferred from a protective layer side to a heat sealing layer side, and furthermore has transparency.

Brief Description of Drawings

[Fig. 1] Fig. 1 is a cross-sectional view showing the configuration of a laminate 1.

[Fig. 2] Fig. 2 is a cross-sectional view of an in-mold label 10 in which a protective layer 5 and a printed layer 3 are placed on the laminate 1 as a usage example.

[Fig. 3] Fig. 3 is a flow chart illustrating some steps of recycling treatment.

[Fig. 4] Fig. 4 is a diagram showing one example of a resin container with an in-mold label adhering thereto.

Description of Embodiments

Hereinafter, the laminate of the present invention will be described in detail. The description given below illustrates one example (representative example) of the present invention, and the present invention is not limited thereby.

In the description given below, the term "(meth)acryl" refers to both acryl and methacryl.

(Laminate)

The laminate of the present invention comprises, for example, a substrate layer, a heat sealing layer, and a

3

coating layer. The laminate of the present invention is used so as to adhere to a resin container by in-mold molding (i.e., is a laminate for in-mold molding). In the laminate of the present invention, the coating layer comprises thermoplastic resin particles and a (meth)acrylic acid-based copolymer. The thermoplastic resin particles have an average particle size of 0.01 to 0.80 μm. The (meth)acrylic acid-based copolymer has a polar group.

The laminate comprises the coating layer together with the heat sealing layer, and the coating layer comprises thermoplastic resin particles and a (meth)acrylic acid-based copolymer, whereby adhesiveness to a resin container can be enhanced. Use of the thermoplastic resin particles may impair transparency due to the diffuse reflection of light. However, the laminate according to the present embodiment can obtain transparency while obtaining adhesiveness, because the thermoplastic resin particles have an average particle size as relatively small as 0.80 μm or smaller.

The average particle size of the thermoplastic resin particles is preferably 0.01 to 0.45 μm in view of conferring much better transparency.

The haze value of the laminate is preferably 60% or less in view of aesthetic obtainment owing to transparency.

The (meth)acrylic acid-based copolymer preferably has a primary to tertiary amino group in view of further improving adhesiveness. The (meth)acrylic acid-based copolymer preferably has a melting point of lower than 60°C or has no melting point in view of discrimination from a heat sealing resin.

The laminate can be preferably used, particularly, when used by adhering to a resin container which is a stretch blow-molded body, in view of obtaining an effect of label removing in a recycling process. The absolute value of the area dimension change rate at 80°C of the laminate is preferably 1% or less, and the tack force at 80°C of the laminate is preferably 0.8 N/cm$^2$ or less, from the viewpoint of obtaining the effect of label removing.

The area dimension change rate is determined as a change rate (%) of the product of respective dimensions in the TD (transverse direction) direction and the MD (machine direction) direction of the laminate when the temperature is changed from 0°C to 80°C. A detailed measurement method will be mentioned later.

In general, an in-mold label (and a laminate for in-mold molding) is mounted in a mold for use in the in-mold molding of a resin container, and adheres to the surface of a resin container by melting through heat from the molding. Hence, the in-mold label adheres in its entire surface to the resin container and is thus not easy to peel by a mechanical approach. Accordingly, high-temperature dipping treatment which involves dipping a labeled container in a high temperature of water or an alkali aqueous solution in the process of recycling may be utilized for removing the laminate from the resin container. In this respect, the treatment temperature is usually 80 to 90°C.

The laminate of the present invention is easily removed from a resin container in high-temperature dipping treatment of 80 to 90°C because the tack force at 80°C is as low as 0.8 N/cm$^2$ or less. The absolute value of the area dimension change rate at 80°C of the laminate of the present invention is 1% or less, and the laminate thus rarely shrinks. Accordingly, a resin container which shrinks such that the absolute value of the area dimension change rate at 80°C exceeds 1% causes stress ascribable to differential shrinkage from the label, and this stress facilitates removing the label therefrom. Thus, the laminate of the present invention designed so as to exert enhanced removability at the time of high-temperature dipping treatment can enhance the recyclability of the resin container.

An injection molding method or a direct blow method is unlikely to apply stress ascribable to stretching because a melted resin is molded. On the other hand, a stretch blow method can apply stress ascribable to stretching because a semi-melted preform is molded by inflation under strong blow pressure.

Hence, a stretch blow-molded body causes stress when re-heated later to near a molding temperature, and tries to shrink in a direction opposite to the direction of inflation. In the case of molding an ester-based resin, particularly, polyethylene terephthalate (PET), used as a feedstock resin by a stretch blow method, the temperature of a preform and the temperature of stretch blow molding are, for example, 70 to 150°C and can be 80 to 120°C or 90 to 115°C. Accordingly, a resin container formed by the stretch blow method easily shrinks during high-temperature dipping treatment. Particularly, an ester-based resin container easily shrinks during high-temperature dipping treatment involving heating at 80 to 90°C. Therefore, difference in area dimension change rate from the laminate of the present invention is easily widened. Accordingly, the laminate and the in-mold label of the present invention are easily removed from the resin container formed by the stretch blow method, and more easily removed from the ester-based resin container. Hence, the laminate and the in-mold label of the present invention can be preferably used as a label for a stretch blow-molded body or as a label for an ester-based resin molded body which is a stretch blow-molded body.

The tack force at a temperature of 90°C of the laminate of the present invention is preferably less than 1.2 N/cm$^2$, more preferably 1 N/cm$^2$ or less, from the viewpoint of more easily removing the laminate and the in-mold label at the time of recycling. The tack force is, for example, 0.6 N/cm$^2$ or more.

The fusion heat rate at 80°C of a heat sealing resin is preferably 80% or less from the viewpoint of a further separating effect at the time of high-temperature dipping treatment.

The heat sealing layer of the laminate may comprise a first heat sealing resin and a second heat sealing resin from the viewpoint of easy adjustment of the tack force. The melting point of the first heat sealing resin is preferably 75 to 85°C, and the melting point of the second heat sealing resin is preferably 95 to 105°C.

(Configurational examples of laminate and in-mold label)

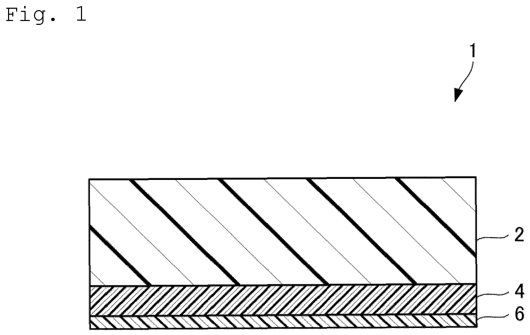

Fig. 1 shows one example of the configuration of the laminate of the present invention. Fig. 1 is a cross-sectional view of a laminate 1. The laminate 1 is a laminate film having a coating layer 6, a heat sealing layer 4, and a substrate layer 2 in this order. The coating layer 6 contains thermoplastic resin particles and a (meth)acrylic acid-based copolymer.

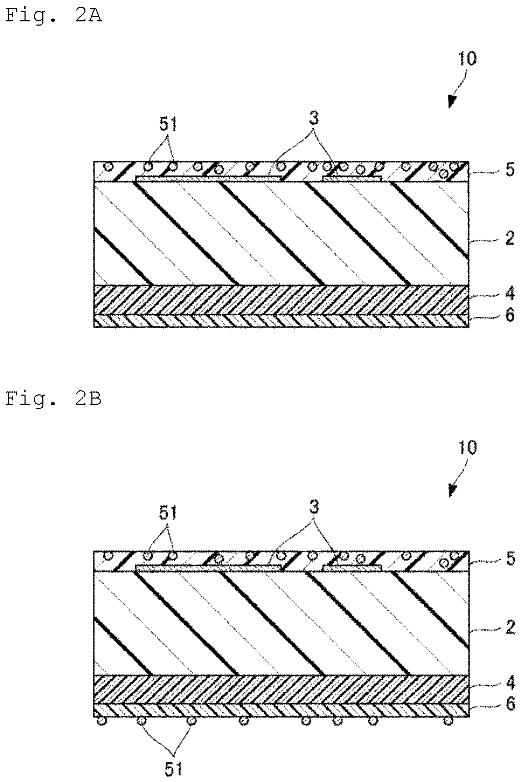

As shown in Figs. 2A and 2B, a protective layer 5 may be disposed on the substrate layer 2 side on the laminate 1 in view of transportation. A printed layer 3 may be disposed on the substrate layer 2 by printing. Further, a protective layer 5 containing silicone 51 may be disposed thereon. Thus, the printed layer 3 and the protective layer 5 are disposed on the laminate 1 to obtain an in-mold label 10.

When in-mold labels are stacked, silicone in the protective layer of one in-mold label may be transferred to the heat sealing layer of the other in-mold label stacked on this protective layer and thereby reduce the adhesiveness of the heat sealing layer.

However, the laminate of the present invention has the coating layer disposed on the outermost surface on the heat sealing layer side. Since the coating layer intervenes between the protective layer and the heat sealing layer, silicone can be prevented from being transferred directly to the heat sealing layer. A release sheet may be disposed on the surface of the protective layer in order to prevent the transfer of silicone. However, the coating layer can be easily formed by coating or the like and is therefore capable of achieving low cost and a simplified production process.

Provided that the protective layer is disposed on the outermost surface on one side of the substrate layer, an additional layer may be disposed between the substrate layer and the printed layer or between the printed layer and the protective layer. Examples of the additional layer include pattern layers such as transfer foil, hologram, and security thread, which are disposed for the purpose of design, prevention of counterfeiting, and the like, intermediate layers for adjusting thicknesses and strength, etc., and functional layers such as polarization films. Likewise, provided that the coating layer is disposed on the outermost surface on the other side of the substrate layer, the additional layer may be disposed between the substrate layer and the heat sealing layer.

As a usage example, Fig. 2B shows a cross-sectional view of one in-mold label 10 separated after in-mold labels 10 of Fig. 2A are stacked. As shown in Fig. 2B, although silicone 51 is transferred from the other in-mold label 10 stacked on the heat sealing layer 4 side, the intervening coating layer 6 prevents the attachment of the silicone 51 to the heat sealing layer 4.

(Recycling of labeled container)

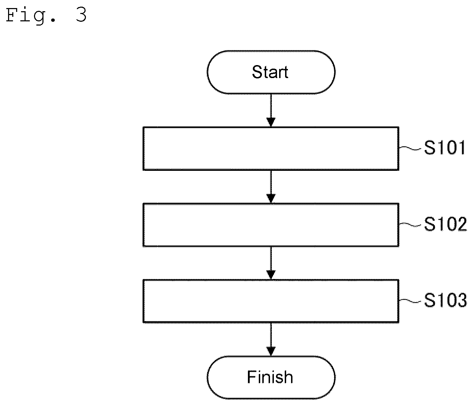

A series of steps of recycling treatment including high-temperature dipping treatment will be briefly described with reference to the flow chart of Fig. 3. When the recycling treatment of a resin container is implemented, first, the labeled container is subjected to each step such as bale opening, sorting on a material basis of the container, and manual sorting and then shifted to a crushing step S101.

In the crushing step S101, a labeled container is sheared and crushed using a shear blade. The flakes of the crushed labeled container are subsequently washed by stirring while subjected to high-temperature dipping treatment in a stirring container (flake washing step S102). The flakes of the resin container thus washed are subsequently subjected to a neutralization step, shifted to a specific gravity separation step S103, and finally collected as resin flakes for which washing and separation have been completed.

In this context, the temperature of the high-temperature dipping treatment in the flake washing step S102 of Fig. 3 is usually 80 to 90°C. The laminate 1 of the present invention has a tack force as low as $0.8\ N/cm^2$ or less at 80°C. Hence, the laminate is easily removed from the resin container in the high-temperature dipping treatment of 80 to 90°C.

The laminate 1 of the present invention rarely shrinks as compared with a resin container 20 because the absolute value of the area dimension change rate at 80°C is 1% or less. Hence, stress occurs due to differential shrinkage between the laminate 1 or the in-mold label 10 and the resin container 20 so that the label is easily removed. Thus, the laminate 1 of the present invention is designed so as to have an enhanced separating effect at the time of high-temperature dipping treatment, and can therefore enhance the recyclability of the resin container 20. As mentioned above, the resin container prepared as a stretch blow-molded body easily widens difference in area dimension change rate from the laminate and the in-mold label. Particularly, the area dimension change rate of the resin container is preferably 4% or more because the separating effect described above is higher.

Hereinafter, each layer will be described.

<Substrate layer>

The substrate layer is not particularly limited as long as the substrate layer can impart strength to the laminate. The substrate layer can be, for example, a thermoplastic resin film. Specifically, the substrate layer may be constituted by a thermoplastic resin or the like. Examples of the thermoplastic resin include polyolefin-type resins, polyester-based resins, polyvinyl chloride resins, polyamide-based resins, polystyrene resins, and polycarbonate resins. The thermoplastic resin constituting the substrate layer is more preferably composed mainly of a polyolefin-type resin. The term "composed mainly" means that the component occupies 50% by mass or more based on the total mass of each resin. When the thermoplastic resin constituting the substrate layer is composed mainly of a polyolefin-type resin, the substrate layer is a polyolefin resin film.

Examples of the polyolefin-type resin that can be used in the substrate layer include polypropylene resins and polyethylene resins. Among them, a polypropylene resin is preferred from the viewpoint of moldability and mechanical strength.

Examples of the polypropylene resin include propylene homopolymers such as isotactic homopolypropylene and syndiotactic homopolypropylene obtained by the homopolymerization of propylene, and propylene copolymers obtained by the copolymerization of propylene as a main constituent with $\alpha$-olefin such as ethylene, 1-butene, 1-hexene, 1-heptene, 1-octene, and 4-methyl-1-pentene. The propylene copolymer may be a binary copolymer or may be a ternary or higher multinary copolymer, and may be a random copolymer or may be a block copolymer.

Examples of the polyethylene resin include high-density polyethylene having a density of 0.940 to 0.965 g/cm$^3$, medium-density polyethylene having a density of 0.920 to 0.935 g/cm$^3$, linear low-density polyethylene having a density of 0.900 to 0.920 g/cm$^3$, copolymers obtained by the copolymerization of ethylene or the like as a main constituent with $\alpha$-olefin such as propylene, butene, hexene, heptene, octene, and 4-methylpentene-1, maleic acid-modified ethylene-vinyl acetate copolymers, ethylene-vinyl acetate copolymers, ethylene-acrylic acid copolymers, ethylene-acrylic acid alkyl ester copolymers, ethylene-methacrylic acid alkyl ester copolymers, metal salts (the metal is, for example, zinc, aluminum, lithium, sodium, or potassium) of ethylene-methacrylic acid copolymers, ethylene-cyclic olefin copolymers, and maleic acid-modified polyethylene.

One of these polyolefin-type resins may be used alone, or two or more thereof may be used in combination.

Examples of the polyester-based resin that can be used in the substrate layer include polyethylene terephthalate resins, polybutylene terephthalate resins, and polyethylene naphthalate. Examples of the polyamide-based resin that can be used in the substrate layer include nylon-6, nylon-6,6, nylon-6,10, and nylon-6,12.

The thermoplastic resin for use in the substrate layer has a melting point of preferably 110°C or higher, more preferably 130°C or higher, further preferably 150°C or higher. This prevents the substrate layer from being melted at the temperature of the high-temperature dipping treatment and facilitates maintaining the rigidity of the substrate layer at the time of the high-temperature dipping treatment. In addition, in the case of performing stretching, the stretching temperature is easily set to 90°C or higher, and the substrate layer is unlikely to thermally shrink at the temperature of the high-temperature dipping treatment. Accordingly, the absolute value of the area dimension change rate of the laminate is easily adjusted to 1% or less.

In the present specification, the melting point and the glass transition temperature of each resin are measured by differential scanning calorimetry (DSC).

(Filler)

The substrate layer can contain a filler in the thermoplastic resin film constituting the substrate layer. Examples of the filler that can be used in the substrate layer include inorganic fillers and organic fillers.

The filler contained in the substrate layer may be one inorganic filler or organic filler described above or may be a combination of two or more fillers.

The content of the filler in the substrate layer is preferably 10% by mass or less, more preferably 5% by mass or less, further preferably 3% by mass or less, from the viewpoint of enhancing the transparency of the substrate layer. The substrate layer may contain no filler. The content is 10% by mass or less, whereby no pore is formed by stretching, and the transparency of the whole label is easily obtained.

The substrate layer can contain an additive including: sterically hindered phenol-based, phosphorus-based, amine-phased, and sulfur-based antioxidants; sterically hindered amine-based, benzotriazole-based, and benzophenone-based light stabilizers; dispersants; lubricants, and antistatic agents, according to a purpose.

The content of the additive in the substrate layer can be usually 0.001 to 3% by mass each independently for the type of the additive from the viewpoint of suppressing reduction in printability while obtaining a sufficient effect of the additive.

(Porosity)

The porosity of the substrate layer is preferably 5% or less, more preferably 3% or less. The porosity of the substrate layer is 5% or less, whereby transparency is easily obtained.

However, a low porosity tends to reduce the heat-insulating property of the laminate. When the heat-insulating property is low, heat flowing upon contact with a melted parison or a semi-melted preform constituting the resin container during in-mold molding easily escapes to the outside, and the heat is unlikely to act effectively on the melting of the heat sealing layer, thereby easily reducing adhesive strength. However, the laminate according to the present embodiment can obtain sufficient adhesive strength even if the porosity is low.

Besides, the crushing step of recycling can avoid only the heat sealing layer remaining in the resin container. The label adhering to the resin container still has strength even after the crushing step, and this strength serves as a repulsion against stress based on differential shrinkage at the time of high-temperature dipping so that the heat sealing layer is easily removed from the resin container.

(Thickness)

The thickness of the substrate layer is preferably 20 $\mu$m or larger, more preferably 40 $\mu$m or larger, from the viewpoint of suppressing the generation of wrinkles during printing, and facilitating fixation to an intended position at the time of insertion to the inside of a mold. The thickness of the substrate layer is preferably 200 $\mu$m or smaller, more preferably 150 $\mu$m or smaller, from the viewpoint of suppressing reduction in strength caused by the thinning of a container at a label boundary portion when the laminate is disposed in the container. Thus, the thickness of the substrate layer is preferably 20 to 200 $\mu$m, more preferably 40 to 150 $\mu$m.

The substrate layer may have a single-layer structure or may have a multilayer structure. In the case of a multilayer structure, each layer can confer various functions such as white opacity, adhesion to ink for use in the printed layer, a heat-insulating property, and easy removability.

Preferred examples of the transparent substrate layer include filler-free polypropylene-based unstretched films (CPP films), polypropylene-based biaxially stretched films (BOPP films), polyethylene terephthalate-based unstretched films (CPET films), and polyethylene terephthalate-based biaxially stretched films (BOPET films).

The surface of the substrate layer may be activated by activation treatment from the viewpoint of enhancing adhesion to the printed layer. Examples of the activation treatment include corona discharge treatment, flame treatment, plasma treatment, glow discharge treatment, and ozone treatment. Among them, corona discharge treatment or flame treatment is preferred, and corona treatment is more preferred.

From a similar viewpoint, a printable layer may be disposed between the substrate layer and the printed layer. The printable layer preferably contains at least one of a binder and an antistatic agent in order to enhance adhesion to the printed layer. The printable layer can optionally contain an additive such as an antiblocking agent, a colorant, an antifoaming agent, and a fungicide.

(Printed layer)

The printed layer is formed by printing for the purpose of conferring design or information, such as a pictorial pattern, a trade name, a manufacturer name, a use method, or a barcode. A printing method is not particularly limited, and a known printing method such as gravure printing, offset printing, flexographic printing, seal printing, or screen printing can be used. Ink such as oil-based ink, oxidative polymerization-curable ink, ultraviolet-curable ink, water-based ink, or liquid toner ink can be used depending on the printing method.

The printed layer is not limited by printing by the printing method and may comprise a heretofore known decoration such as printing using various printers, foiling such as hot stamping or cold stamping, transfer foil, and hologram.

(Protective layer)

The protective layer is positioned on the outermost surface on one side of the substrate layer where the printed layer is disposed. The protective layer contains silicone and can thereby decrease the coefficient of friction of the outermost surface and reduce damage and stains, etc. of the printed layer. The silicone is a silicon compound having a polysiloxane bond.

The content of a Si atom in the protective layer is preferably 1 atm% or more, more preferably 2 atm% or more, further preferably 3 atm% or more, from the viewpoint of decreasing the coefficient of friction and enhancing lubricity. The content of a Si atom in the protective layer is preferably 15 atm% or less, more preferably 8 atm% or less, further preferably 6 atm% or less, from the viewpoint of reducing bleed-out. Thus, the content of a Si atom in the protective layer is preferably 1 to 15 atm%, more preferably 2 to 8 atm%, further preferably 3 to 6 atm%. The content of a Si atom can be determined as a Si atom concentration measured by XPS.

The protective layer is preferably formed by coating the substrate layer with the printed layer disposed thereon with a coating solution containing silicone, from the viewpoint of easy molding. A coating solution called overprint (OP) varnish can usually be used as the coating solution. The OP varnish is generally a coating solution that contains a resin curable by visible light, ultraviolet ray, oxidative polymerization, or the like, and has high transparency. A commercially available product of the OP varnish containing silicone in advance may be used as the coating solution, or the OP varnish containing no silicone may be mixed with silicone, and the prepared coating solution can be used.

The thickness of the protective layer differs depending on the printing method and is usually 0.5 to 20 $\mu$m, preferably 1 to 10 $\mu$m, more preferably 1.5 to 8 $\mu$m. A thicker protective layer tends to enhance lubricity or scratch resistance, and a thinner protective layer tends to facilitate suppressing poor curing.

(Heat sealing layer)

The heat sealing layer is disposed for the purpose of enhancing the adhesiveness of the laminate and the in-mold label to a container. In general, at the time of in-mold molding of a container, the in-mold label is disposed on the inner side of a mold such that the container faces the heat sealing layer. The heat sealing layer is melted by heat from in-mold molding so that the in-mold label (or the laminate) is thermally fused to the surface of the resin container. As shown in Fig. 1, a coating layer is preferably disposed on the outermost surface of the heat sealing layer from the viewpoint of enhancement in adhesiveness.

The heat sealing layer of the laminate of the present invention has high adhesiveness, particularly, to a container made of a polyethylene terephthalate (PET) resin. PET has a low melt viscosity and has the difficulty in keeping the shape of a parison in a melted state. Therefore, a PET resin container is usually formed by a stretch blow method which involves heating to near the softening point, not the melting point. Hence, the thermal fusion of the laminate and the in-mold label to the PET resin container is also performed in a heating temperature range near the softening point, not the melting point, of the PET resin. For the PET resin container thus formed, the heat sealing layer is preferably a thermoplastic resin film of a low-melting resin having a low melting point of 60 to 130°C from the viewpoint of enhancing adhesiveness to the container by sufficiently melting the heat sealing resin of the laminate and the in-mold label under molding conditions of a lower temperature than that of a direct blow method which involves heating to the melting point or higher. A lower melting point produces sufficient adhesiveness under a smaller quantity of heat. A higher melting point facilitates film formation and easily decreases sticking to a roll in film production. The melting point can be measured by differential scanning calorimetry (DSC).

The heat sealing layer preferably employs a combination of two or more thermoplastic resins differing in melting point as heat sealing resins, from the viewpoint of easily adjusting adhesive force.

Examples of the thermoplastic resin include resins such as high-density polyethylene, medium-density polyethylene, low-density polyethylene, linear low-density polyethylene, ethylene-vinyl acetate copolymers, ethylene-(meth)acrylic acid copolymers, ethylene-(meth)acrylic acid alkyl ester copolymers (the alkyl group has 1 to 8 carbon atoms), and metal salts (e.g., salts with metals selected from Zn, Al, Li, K, and Na) of ethylene-(meth)acrylic acid copolymers. Other examples of the thermoplastic resin include random copolymers and block copolymers of $\alpha$-olefin obtained by copolymerizing at least two or more comonomers selected from $\alpha$-olefin having 2 to 20 carbon atoms in the molecule.

Among them, low-density polyethylene, linear low-density polyethylene, an ethylene-vinyl acetate copolymer, and an ethylene-based copolymer obtained by copolymerization using a metallocene catalyst are preferred.

In the present invention, the laminate needs to have, as its feature, a separating effect that enables the laminate to be removed from a resin container at the time of high-temperature dipping treatment of recycling while maintaining sufficient adhesive force between the laminate and the resin container at the time of usual use. Hence, heat sealing resins having different melting points are preferably used in combination from the viewpoint of easily adjusting the adhesive force and from the viewpoint of improving the separating effect at the time of high-temperature dipping treatment. Specifically, heat sealing resins, a first heat sealing resin of which has a melting point of 75 to 85°C and a second heat sealing resin of which has a melting point of 95 to 105°C are preferably adjusted, for use, such that the tack force at 80°C is 0.8 N/cm$^2$ or less. From such a viewpoint, the content ratio (mass ratio) between the first heat sealing resin and the second heat sealing resin in the heat sealing layer is preferably 5:95 to 90:10, more preferably 7.5:92.5 to 70:30, further preferably 10:90 to 50:50.

The fusion heat rate at 80°C of the heat sealing resin is preferably 80% or less, more preferably 75% or less, further preferably 70% or less. The fusion heat rate is 80% or less, whereby the label is more easily removed from the resin container at the time of high-temperature dipping.

The heat sealing resin may contain a tackifier. Examples thereof include hydrogenated petroleum resins, aromatic hydrocarbon resins, and aliphatic hydrocarbon resins. Examples of the hydrogenated petroleum resin include partially hydrogenated petroleum resins. Examples of the aromatic hydrocarbon resin include terpene-based resins, rosin-based resins, and styrene-based resins. The heat sealing resin can optionally contain an additive that is generally used in the polymer field, such as an anti-fogging agent, a lubricant, an antiblocking agent, an antistatic agent, an antioxidant, a heat stabilizer, a light stabilizer, a weather stabilizer, and an ultraviolet absorber. The content of such an additive is usually 0.01 to 5% by mass each independently for the type of the additive.

The heat sealing layer may have a single-layer structure of only the thermoplastic resin film mentioned above, or may have a multilayer structure. When the heat sealing layer has a multilayer structure, the heat sealing layer is composed of, for example, a first heat sealing layer on the inner side (substrate layer side) and a second heat sealing layer on the outer side (coating layer side). In this case, a component constituting the second heat sealing layer is the same as that listed as the component constituting the heat sealing layer mentioned above. On the other hand, in the first heat sealing layer, the heat sealing resin preferably comprises the first heat sealing resin having a melting point of 75 to 85°C mentioned above. The content of the first heat sealing resin in the first heat sealing layer is preferably 80% by mass or more. The fusion heat rate at 80°C of the heat sealing resin in the first heat sealing layer is preferably 80% or less, more preferably 75% or less, further preferably 70% or less.

When the heat sealing layer has a single-layer structure, the thickness of the heat sealing layer is preferably 0.5 $\mu$m or larger, more preferably 0.7 $\mu$m or larger, further preferably 1 $\mu$m or larger, from the viewpoint of enhancing adhesiveness. The thickness of the heat sealing layer is preferably 10 $\mu$m or smaller, more preferably 7 $\mu$m or smaller, from the viewpoint of suppressing cohesive failure inside the heat sealing layer. Thus, the thickness of the heat sealing layer is preferably 0.5 to 10 $\mu$m, more preferably 0.7 to 7 $\mu$m.

(Coating layer)

The coating layer is disposed on the outermost surface on the other side of the substrate layer where the heat sealing layer is disposed. The coating layer comprises thermoplastic resin particles from the viewpoint of conferring adhesiveness. The thermoplastic resin particles have a predetermined average particle size from the viewpoint of transparency. The coating layer is preferably laminated adjacently to the heat sealing layer from the viewpoint of maintaining the adhesiveness of the heat sealing layer. This coating layer can enhance adhesiveness to a resin container.

The coating layer also contains a (meth)acrylic acid-based copolymer having a polar group. The coating layer, by containing the (meth)acrylic acid-based copolymer, can suppress reduction in adhesiveness caused by the transfer of silicone. The laminate or the in-mold label is produced as a long sheet and then stored as a stack of cut pieces as a sheet or wound and stored in a roll. In the case of an in-mold label having no coating layer, the protective layer of one in-mold label is adjacent to the heat sealing layer of another in-mold label. In this respect, silicone may be transferred from the protective layer to its adjacent heat sealing layer, depending on the status of storage. An event has been confirmed in which the transfer of silicone reduces the adhesiveness of the heat sealing layer.

On the other hand, the laminate of the present invention has the coating layer disposed on the outermost surface on the other side of the substrate layer, and the coating layer intervenes between the heat sealing layer and the protective layer, whereby silicone can be prevented from being attached directly to the heat sealing layer. This can reduce the influence of silicone on the heat sealing layer and can suppress reduction in adhesiveness.

The average particle size of the thermoplastic resin particles is in the range of 0.01 to 0.80 $\mu$m. Since the thermoplastic resin particles have the average particle size of 0.01 to 0.80 $\mu$m, transparency can be obtained while adhesiveness is obtained. The average particle size is more preferably 0.55 $\mu$m or smaller, further preferably 0.45 $\mu$m, particularly preferably 0.2 $\mu$m or smaller, from the viewpoint of transparency.

The thermoplastic resin particles are, for example, olefin-based copolymer particles and can be obtained from an olefin-based copolymer emulsion. The olefin-based copolymer is a copolymer containing 50% by mass or more of olefin as a polymerized component. Examples of the olefin-based copolymer can include ethylene-(meth)acrylic acid copolymers, alkali (or alkaline earth) metal salts of ethylene-(meth)acrylic acid copolymers, ethylene-(meth)acrylic acid ester-maleic anhydride copolymers, (meth)acrylic acid-grafted polyethylene, maleic anhydride-grafted polyethylene, maleic anhydride-grafted ethylene-vinyl acetate copolymers, maleic anhydride-grafted (meth)acrylic acid ester-ethylene copolymers, maleic anhydride-grafted polypropylene, maleic anhydride-grafted ethylene-propylene copolymers, maleic anhydride-grafted ethylene-propylene-butene copolymers, maleic anhydride-grafted ethylene-butene copolymers, and maleic anhydride-grafted propylene-butene copolymers.

The olefin-based copolymer is preferably an olefin-based copolymer having a melting point or a softening point of 130°C or lower, more preferably an ethylene-(meth)acrylic acid copolymer, an ethylene-(meth)acrylic acid ester-maleic anhydride copolymer, a maleic anhydride-grafted ethylene-vinyl acetate copolymer, a maleic anhydride-grafted (meth) acrylic acid ester-ethylene copolymer, a maleic anhydride-grafted ethylene-propylene-butene copolymer, a maleic anhydride-grafted ethylene-butene copolymer, or a maleic anhydride-grafted propylene-butene copolymer. Use of such an olefin-based copolymer can improve the ink receptivity.

The melting point of the thermoplastic resin particles is preferably 60°C or higher, more preferably 70°C or higher, further preferably 80°C or higher.

Particularly, when the thickness of the coating layer is 3 $\mu$m or smaller and further 1 $\mu$m or smaller, the melting point of the thermoplastic resin particles is 60°C or higher, whereby reduction in transparency caused by the fusion among the thermoplastic resin particles can be suppressed when a coating film is obtained by drying a coating solution.

At least one member selected from the group consisting of a nonionic surfactant, a nonionic water-soluble polymer, a cationic surfactant, and a cationic water-soluble polymer can be used as a dispersant for dispersing the olefin-based copolymer into water to prepare an emulsion.

The content of the thermoplastic resin particles in the coating layer is preferably 20% by mass or more, more preferably 40% by mass or more, further preferably 50% by mass or more, particularly preferably 60% by mass or more, from the viewpoint of adhesiveness to a resin container. The content of the thermoplastic resin particles in the coating layer may be 90% by mass or less or may be 85% by mass or less.

The (meth)acrylic acid-based copolymer having a polar group is also favorably compatible with a PET resin and can form a labeled container without reducing the adhesiveness of the laminate to a container made of the PET resin. The (meth)acrylic acid-based copolymer preferably has a polar group from the viewpoint of adhesiveness. The (meth)acrylic acid-based copolymer having a polar group may have an anionic, cationic, or amphoteric group as long as the group has polarity. The (meth)acrylic acid-based copolymer preferably has a cationic group, and a water-soluble (meth)acrylic acid-based copolymer having a cationic group is more preferred, from the viewpoint of enhancing the effect of suppressing reduction in adhesiveness of the heat sealing layer. Provided that the (meth)acrylic acid-based copolymer having a polar group is water-soluble, the coating layer is easily formed by preparing a coating solution using an aqueous solvent, and performing coating with the coating solution. The (meth)acrylic acid-based copolymer having a polar group can be used together with, for example, an ethylenimine-based copolymer, a water-soluble polymer having a quaternary ammonium salt structure or a phosphonium salt structure, or a vinyl-based polymer cationized by the modification of a water-soluble polymer such as polyvinylpyrrolidone or polyvinyl alcohol. One or more of them can be used in combination.

The (meth)acrylic acid copolymer having a cationic group is preferably an amino group-containing (meth)acrylic acid-based copolymer from the viewpoint of suppressing reduction in adhesiveness.

In the present specification, the cationic group refers to a group that assumes positive charge when dissolved in water. The cationic group can be, for example, (A) a group capable of becoming a salt through a bond to an anion or (B) a group capable of becoming a cation through a bond to a proton in the presence of an acid (e.g., acetic acid), and thereby binding to an acid anion. The group (A) can be, for example, an ammonium salt group or a phosphonium salt group together with the anion. The group (B) can be, for example, a nitrogen compound group such as an amino group.

The amino group is a group represented by the formula (a) given below wherein $R^1$ and $R^2$ can be each independently a hydrogen atom, an alkyl group having 1 to 3 carbon atoms, or an alkenyl group having 1 to 3 carbon atoms. The cationic group constituting the ammonium salt group is a group represented by the formula (b) given below wherein $R^3$ to $R^5$ can be each independently an alkyl group having 1 to 3 carbon atoms, or an alkenyl group having 1 to 3 carbon atoms. In the present specification, it shall be understood that when both of $R^1$ and $R^2$ are hydrogen atoms, the group represented by the formula (a) given below is a primary amino group; when any one of $R^1$ and $R^2$ is a hydrogen atom, the group represented by the formula (a) given below is a secondary amino group; and when neither $R^1$ nor $R^2$ is a hydrogen atom, the group represented by the formula (a) given below is a tertiary amino group. It shall also be understood that the group represented by the formula (b) given below is a quaternary amino group.

$$-NR^1R^2 \ldots \qquad (a)$$

$$-N+R^3R^4R^5 \ldots \qquad (b)$$

The amino group-containing (meth)acrylic acid-based copolymer preferably has a primary to tertiary amino group, more preferably has a secondary or tertiary amino group, and further preferably has a tertiary amino group, from the viewpoint of improvement in adhesiveness. The "(meth)acrylic acid-based copolymer" in the "(meth)acrylic acid-based copolymer having a polar group" contained in the coating layer can be different from the thermoplastic resin having heat sealability contained in the heat sealing layer. Specifically, the "(meth)acrylic acid-based copolymer having a polar group" contained in the coating layer does not have to have heat sealability and may have a melting point of, for example, lower than 60°C, -50 to 50°C, or -20 to 40°C or may have no melting point. The "(meth) acrylic acid-based copolymer having a polar group" may have no melting point. The "(meth)acrylic acid-based copolymer having a polar group" may have a glass transition temperature of, for example, -50 to 70°C, -20 to 60°C, or 0 to 50°C.

The content of the (meth)acrylic acid-based copolymer having a polar group in the coating layer is preferably 5% by mass or more, more preferably 10% by mass or more, further preferably 15% by mass or more, from the viewpoint of inhibiting adhesive strength decrease. The (meth)acrylic acid-based copolymer having a polar group in the coating layer is preferably 50% by mass or less, more preferably 40% by mass or less, from the viewpoint of the prevention of blocking when laminates or in-mold labels are stored as a stack.

The coating layer can contain an additional aid component such as a binder, an antistatic agent, a crosslinking promoter, an antiblocking agent, a pH adjuster, or an antifoaming agent without impairing the advantageous effects of the invention. Examples of the binder include polyvinyl alcohol, polyvinylpyrrolidone, polyoxyalkylene derivatives, polyethyleneimine and its derivatives, polyacrylic acid copolymers, and urethane resins. Among them, polyethyleneimine or its derivative is preferred. The content of each of these aid components in the coating layer is preferably 10% by mass or less, more preferably 9% by mass or less, further preferably 8% by mass or less, particularly preferably 7% by mass or less. The total content of these aid components in the coating layer is preferably 25% by mass or less, preferably 20% by mass or less, further preferably 19% by mass or less, particularly preferably 18% by mass or less. The coating layer preferably contains no silane coupling agent. If the coating layer contains a silane coupling agent, the content of the silane coupling agent is preferably 2% by mass or less, more preferably 1% by mass or less, further preferably 0.8% by mass or less, particularly preferably 0.5% by mass or less. The coating layer contains no silane coupling agent or has a small content of the silane coupling agent, whereby the risk of disrupting the polar group of the (meth)acrylic acid-based copolymer by a silanol group resulting from hydrolysis is reduced, and its functions are easily exerted.

The thickness of the coating layer is preferably 0.01 $\mu$m or larger, more preferably 0.03 $\mu$m or larger, further preferably 0.1 $\mu$m or larger, from the viewpoint of improvement in adhesiveness and from the viewpoint of the exertion of an adhesive strength decrease-inhibiting effect. The thickness of the coating layer is preferably 7 $\mu$m or smaller, more preferably 3 $\mu$m or smaller, further preferably 1 $\mu$m or smaller, from the viewpoint of maintaining the adhesiveness of the heat sealing layer and from the viewpoint of transparency.

(Method for producing laminate)

A method for producing the laminate is not particularly limited, and the laminate can be produced by a method of laminating the heat sealing layer on one surface of the substrate layer.

Examples of the method for forming a film of a substrate layer having a single-layer structure include extrusion molding (cast molding) using a T die, inflation molding using an O die, and calendar molding using a rolling mill roll. Examples of the method for forming a film of a substrate layer having a multilayer structure include a method of supplying respective thermoplastic resin compositions of multiple layers to different extruders, melting the thermoplastic resin compositions, supplying the respective thermoplastic resin compositions discharged from the extruders to a T die or an O die having a multilayer die configuration, laminating the compositions in the multilayer die, and discharging the resulting film. Alternatively, a thermoplastic resin composition may be extrusion-laminated onto a single-layer or multilayer sheet. This method may use a paper substrate as the substrate layer.

Examples of the method for laminating the heat sealing layer onto the other surface of the substrate layer include a co-extrusion method, an extrusion lamination method, an application method, and a film lamination method.

The co-extrusion method involves supplying one or more thermoplastic compositions for the substrate layers and one or more thermoplastic compositions for the heat sealing layers to a multilayer die, and laminating the compositions in the multilayer die, followed by extrusion. Therefore, lamination is performed at the same time with molding.

The extrusion lamination method involves forming the substrate layer first, laminating thereto a melted thermoplastic composition for the heat sealing layer, followed by nip with rolls while cooling. Therefore, molding and lamination are performed in separate steps.

The film lamination method involves forming respective films as the substrate layer and the heat sealing layer, and laminating the films via a pressure-sensitive adhesive. Therefore, molding and lamination are performed in separate steps.

The coating layer can be disposed by an application method on the heat sealing layer established by the method described above. Examples of the application method can include a solvent coating method and an aqueous coating method. Among these methods, the co-extrusion method is preferred from the viewpoint that the layers can adhere firmly to each other.

The substrate layer or the heat sealing layer may be an unstretched film or may be a stretched film.

Examples of the stretching method include a MD stretching method which employs difference in peripheral speed among rolls, a TD stretching method which employs a tenter oven, a sequential biaxial stretching method using these methods in combination, a rolling method, a simultaneous biaxial stretching method using a tenter oven and Pantagraph in combination, and a simultaneous biaxial stretching method using a tenter oven and a linear motor in combination. Alternatively, for example, a simultaneous biaxial stretching (inflation molding) method may be used which involves extrusion-molding a melted resin into a tube using an annular die connected to a screw extruder, followed by air blow thereinto.

The substrate layer and the heat sealing layer may be each individually stretched before lamination of the layers, or may be laminated and then stretched together. Alternatively, stretched layers may be laminated and then stretched again.

When the thermoplastic resin for use in each layer is an amorphous resin, the stretching temperature in carrying out stretching is preferably in a range equal to or higher than the glass transition temperature of the thermoplastic resin. When the thermoplastic resin is a crystalline resin, the stretching temperature is preferably in a range equal to or higher than the glass transition temperature of an amorphous moiety of the thermoplastic resin and equal to or lower than the melting point of a crystalline moiety of the thermoplastic resin and, specifically, is preferably a temperature lower by 2 to 60°C than the melting point of the thermoplastic resin.

The stretching rate of the thermoplastic resin film is not particularly limited and is preferably in the range of 20 to 350 m/min from the viewpoint of stable stretch molding.

In the case of stretching the thermoplastic resin film, the draw ratio can also be appropriately determined in consideration of the characteristics and the like of the thermoplastic resin used. For example, in the case of stretching a thermoplastic resin film containing a homopolymer of propylene or a copolymer thereof in one direction, the draw ratio is usually approximately 1.2-fold or more, preferably 2-fold or more, and on the other hand, usually 12-fold or less, preferably 10-fold or less. The draw ratio for biaxial stretching is an area draw ratio of usually 1.5-fold or more, preferably 10-fold or more, and on the other hand, usually 60-fold or less, preferably 50-fold or less.

Provided that the draw ratio falls within the range described above, mechanical strength is easily imparted to the laminate, and repulsion against the shrinkage of a resin container at the time of high-temperature dipping is easily obtained. Therefore, a label separation rate is easily improved. Besides, the thermoplastic resin film is unlikely to be broken and tends to attain stable stretch molding.

The heat sealing layer laminated on the substrate layer is coated with a coating solution for the coating layer so that the coating layer is disposed on the outermost surface on the other side of the substrate layer. Examples of the coating method include printing and application. The coating solution can be prepared by dissolving or dispersing each component of the coating layer, such as the thermoplastic resin particles and the (meth)acrylic acid-based copolymer having polarity, in a solvent. When the thermoplastic resin particles are water-dispersible and the (meth)acrylic acid-based copolymer having polarity is water-soluble, a water-dispersible and water-soluble coating solution can be prepared using an aqueous solvent. Process management is easy, and this is also preferred from the viewpoint of safety. The aqueous solvent is composed mainly of water and may contain a water-soluble organic solvent such as methyl alcohol, ethyl alcohol, isopropyl alcohol, acetone, methyl ethyl ketone, ethyl acetate, toluene, or xylene. The phrase "composed mainly of water" means that water occupies 50% by mass or more of the whole.

Coating with the coating solution and drying of a coating film may be carried out in an in-line manner with the molding of the substrate layer or may be carried out in an off-line manner. The coating mass of the coating solution can be appropriately adjusted in consideration of the thickness of the coating layer after drying, the concentration of a contained component, and the like. Application can be performed using an application apparatus such as a die coater, a bar coater, a roll coater, a lip coater, a gravure coater, a spray coater, a blade coater, a reverse coater, or an air knife coater. Drying can be performed using a drying apparatus such as a hot air blower or an infrared dryer.

A method for producing the in-mold label is not particularly limited, and the in-mold label can be produced by a method of laminating the printed layer and the protective layer, etc. onto the surface on the side opposite to the heat sealing layer of the laminate. The printed layer can be disposed on the surface on the side opposite to the heat sealing layer of the substrate layer in the laminate. Examples of the printed information include product displays such as trade names and logotypes, manufacturers, distributer names, use methods, and barcodes.

Examples of the printing method include gravure printing, offset printing, flexographic printing, seal printing, and screen printing.

After an additional layer other than the printed layer, such as a pattern layer is optionally established, the protective layer is disposed on the outermost surface on one side of the substrate layer by coating with a coating solution for the protective layer. Among others, the protective layer is preferably disposed by printing, as in the printed layer, because a process is simple and a protective layer material can be easily selected from commercially available products. Besides, an additional layer may be disposed between the substrate layer and the heat sealing layer.

(Label processing)

The laminate of the present invention and the in-mold label obtained using this laminate are processed into a necessary shape and dimension by cutting out or punching out. The cutting out or the punching out may be performed before printing and is preferably performed after printing because of the ease of work.

The thickness of the in-mold label is preferably 25 $\mu$m or larger, more preferably 45 $\mu$m or larger, from the viewpoint of suppressing wrinkles and the like of the label. The thickness is preferably 200 $\mu$m or smaller, more preferably 150 $\mu$m or smaller, from the viewpoint of conferring transparency while suppressing reduction in strength caused by the thinning of a container at a label boundary portion when the in-mold label is disposed in the container.

(In-mold label-attached container)

An in-mold label-attached container is a resin container provided on its surface with the in-mold label of the present invention mentioned above. In the laminate of the present invention, a polyolefin resin film which requires low cost and is excellent in moldability and mechanical strength can be preferably used as the substrate layer. A thermoplastic resin film having a melting point in a specific range depending on the molding temperature of stretch blow molding is used as the heat sealing layer. Therefore, the laminate has high adhesiveness even to a PET resin, which can be heterogeneous to the substrate layer, and serves as a label optimized for a PET resin container formed by stretch blow molding. However, the heat sealing layer of the laminate of the present invention also exhibits high adhesiveness in direct blow molding.

Therefore, the laminate can also be used in, for example, a polyethylene resin container other than the PET resin container, and a polypropylene resin container.

(Material of container)

The laminate of the present invention has high adhesiveness to a PET resin and is an optimized laminate for a PET resin container, as mentioned above. However, the laminate also has favorable adhesiveness to, for example, a polyethylene resin other than the PET resin, and a polypropylene resin. Thus, the material of the container is not particularly limited.

Among others, a laminate comprising a heat sealing layer having a polar resin layer on the surface can be used in a polar resin container made of, for example, a polyester-based resin such as polyethylene terephthalate (PET), polybutylene terephthalate, polybutylene succinate, or polylactic acid. Examples of the polar resin container that can be used also include other polar resin containers such as polycarbonate-based resins, acrylonitrile-styrene (AS) resins, acrylonitrile-butadiene-styrene (ABS) resins, and methyl methacrylate-styrene (MS) resins because an adhesive mechanisms to these resins is similar to that to the polyester-based resin.

The color of the container may be clear or natural color containing no color material (e.g., a pigment or a dye) or may be opaque color ascribable to a color material or coloring.

The cross-sectional shape of the barrel of the container may be a true circle or may be an oval or a rectangle. When the cross-sectional shape of the barrel is a rectangle, the corners preferably have a curvature. The cross section of the barrel preferably has a true circle or an oval close to a true circle, more preferably a true circle, from the viewpoint of strength.

(Method for producing in-mold label-attached container) (In-mold molding)

A method for producing the in-mold label-attached container is not particularly limited as long as the in-mold label can be disposed on the surface of a resin container by the in-mold molding of the resin container.

Examples of the in-mold molding method suitable for using the laminate of the present invention include stretch blow molding, direct blow molding, injection molding, and differential-pressure molding. The in-mold label of the present invention has high adhesiveness in stretch blow molding, particularly, excellent adhesiveness to a PET resin container, as mentioned above. Besides, the in-mold label is easily removed from the resin container in a high-temperature dipping step of recycling.

(Characteristics of laminate and in-mold label-attached container)

As described above, a labeled container is obtained in which the in-mold label is affixed to the surface of the container. The in-mold label-attached container preferably has the following characteristics.

(Average particle size)

In the laminate of the present invention, the thermoplastic resin particles contained in the coating layer preferably have an average particle size of 0.01 to 0.80 $\mu$m from the viewpoint of conferring the adhesiveness of the label to the resin container and from the viewpoint of imparting transparency to the laminate. The average particle size can be measured using a laser diffraction-type particle size distribution measuring device. The average particle size of the thermoplastic resin particles may be determined as an average value by observing the coating layer surface under an electron microscope, and measuring the maximum diameters of at least ten particles.

(Haze value)

The haze value of the laminate of the present invention is preferably 60% or less, more preferably 55% or less, from an aesthetic standpoint of the laminate. The haze value is measured using a haze meter (manufactured by Nippon Denshoku Industries Co., Ltd., trade name: NDH2000) in accordance with JIS-K-7136: 2000.

(Area dimension change rate)

The absolute value of the area dimension change rate at a temperature of 80°C of the laminate of the present invention is preferably 1% or less. A smaller area dimension change rate more easily causes stress between the laminate and a resin container which easily shrinks. Thus, the label is easily removed from the resin container in high-temperature dipping treatment. Likewise, the absolute value of the area dimension change rate at a temperature of 90°C of the laminate of the present invention is also preferably 1% or less from the viewpoint of easy removing of the in-mold label at the time of recycling.

A method for calculating the area dimension change rate will be described in a paragraph of Examples.

(Tack force)

The tack force at a temperature of 80°C of the laminate of the present invention is 0.8 N/cm$^2$ or less, preferably 0.75 N/cm$^2$ or less, more preferably 0.7 N/cm$^2$ or less, further preferably 0.65 N/cm$^2$ or less, particularly preferably 0.6 N/cm$^2$ or less. A lower tack force at 80°C facilitates removing the laminate and the in-mold label from the resin container at the time of high-temperature dipping treatment. Thus, the resin container is easily recycled. The tack force is, for example, 0.01 N/cm$^2$ or more.

Likewise, the tack force at a temperature of 90°C of the laminate of the present invention is preferably less than 1.2 N/cm$^2$, more preferably 1 N/cm$^2$ or less, from the viewpoint of easier removing of the laminate and the in-mold label at the time of recycling. The tack force is, for example, 0.6 N/cm$^2$ or more.

On the other hand, the tack force at a temperature of 100°C of the laminate of the present invention is preferably 1.2 N/cm$^2$ or more and is, for example, 8 N/cm$^2$ or less, from the viewpoint of allowing the in-mold label to sufficient adhere to the resin container at the time of in-mold molding.

A method for calculating the tack force will be described in a paragraph of Examples.

(Fusion rate)

The fusion rate at a temperature of 80°C of the heat sealing layer in the laminate of the present invention is preferably 80% or less, more preferably 75% or less, further preferably 70% or less, particularly preferably 65% or less. The fusion rate is 80% or less, whereby the tack force is easily kept low at the temperature of high-temperature dipping treatment. The fusion rate at 80°C is, for example, 1% or more.

Likewise, the fusion rate at a temperature of 90°C of the heat sealing layer is preferably 0% or less, more preferably 85% or less, further preferably 80% or less, particularly preferably 75% or less, from the viewpoint of keeping the tack force low. The fusion rate at 90°C is, for example, 60% or more.

On the other hand, the fusion rate at a temperature of 100°C of the heat sealing layer is preferably 70% or more, more preferably 75% or more, further preferably 80% or more, particularly preferably 85% or more, from the viewpoint of allowing the laminate to sufficiently adhere to the resin container. The fusion rate at 100°C is, for example, 100% or less.

When the laminate has a plurality of heat sealing layers, the heat sealing layer located on the outermost side (side opposite to the substrate layer) preferably has the fusion rate described above.

(Fusion heat rate)

The fusion heat rate at a temperature of 80°C of the heat sealing layer in the laminate of the present invention is preferably 80% or less, more preferably 75% or less, further preferably 70% or less, particularly preferably 65% or less. Provided that the fusion heat rate is 80% or less, the tack force is easily kept low at the temperature of high-temperature dipping treatment. The fusion heat rate at 80°C is, for example, 1% or more.

The fusion heat rate is measured by DSC.

(Adhesive strength)

The adhesive strength of the laminate of the present invention to the resin container is preferably equal to or more than 200 gf/15 mm, more preferably equal to or more than 300 gf/15 mm, further preferably equal to or more than 350 gf/15 mm, from the viewpoint of suppressing peeling off from the resin container in a usual usage state. The adhesive strength can be equal to or less than 600 gf/15 mm or can be equal to or less than 450 gf/15 mm, from the viewpoint of easy peeling from the resin container in high-temperature dipping treatment.

A method for calculating the adhesive strength will be described in a paragraph of Examples.

(Label separation rate)

The label separation rate at 80°C of the laminate of the present invention is preferably 40% or more from the viewpoint of a separating effect. The label separation rate is more preferably 100%.

A method for calculating the label separation rate will be described in a paragraph of Examples.

Examples

Hereinafter, the present invention will be further specifically described with reference to Examples. However, the present invention is not limited by Examples given below. Terms such as "parts" and "%" in Examples mean terms on a mass basis unless otherwise specified.

(Production Example 1)

A reactor (internal capacity: 150 L) equipped with a reflux condenser, a nitrogen introduction tube, a stirrer, a thermometer, a dropping funnel, and a jacket for heating was charged with 40 kg of isopropanol (manufactured by Tokuyama Corp., product name: TOKUSO IPA). While the contents were stirred, 12.6 kg of N,N-dimethylaminoethyl methacrylate (manufactured by Sanyo Chemical Industries, Ltd., product name: Methacrylate DMA), 12.6 kg of butyl methacrylate (manufactured by Mitsubishi Rayon Co., Ltd., product name: Acryester B), and 2.8 kg of higher alcohol methacrylic acid ester (manufactured by Mitsubishi Rayon Co., Ltd., product name: Acryester SL, a mixture of lauryl methacrylate and tridecyl methacrylate) were introduced into the reactor. Subsequently, the system was purged with nitrogen, and the internal temperature of the reactor was elevated to 80°C. Then, 0.3 kg of 2,2'-azobisisobutyronitrile (manufactured by FUJIFILM Wako Pure Chemical Corp., product name: V-60(AIBN)) was introduced as a polymerization initiator into the reactor.

While the internal temperature of the reactor was kept at 80°C, copolymerization reaction was performed by continuous stirring for 4 hours. After subsequent cooling to ordinary temperature, the obtained copolymer was neutralized by introducing 4.3 kg of glacial acetic acid (manufactured by FUJIFILM Wako Pure Chemical Corp.) into the reactor. Subsequently, while 48.3 kg of ion exchange water was introduced into the reactor, the solvent in the system was replaced with an aqueous solvent by distilling off isopropanol, to obtain a viscous aqueous solution (solid concentration: 35% by mass) of a methacrylic acid-based copolymer (having no melting point, weight-average molecular weight: 40,000) having a tertiary amino group as a polar group in a side chain. The obtained methacrylic acid-based copolymer was bonded to a proton in the aqueous solution and bonded as a cation to an acetate ion. Therefore, the polar group was confirmed to be a cationic group.

(Production Example 2)

96.7 parts by mass of an OP varnish (manufactured by T&K TOKA Corp., product name: L Carton OP Varnish KS), 3 parts by mass of a silicone base (manufactured by T&K TOKA Corp., product name: UV Reactive Silicone A), and 0.3 parts by mass of a silicone aid (manufactured by T&K TOKA Corp., product name: UV Reactive Silicone B) were mixed to obtain a coating solution for a protective layer containing silicone.

(Example 1)

<Production of in-mold label>

A thermoplastic resin (a1) composed of a thermoplastic resin (propylene homopolymer (trade name: NOVATEC PP FY4, manufactured by Japan Polypropylene Corp., MFR (230°C, a load of 2.16 kg): 5 g/10 min, melting point: 167°C)) was prepared as a material for a substrate layer.

70% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)) and 30% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) were mixed to prepare a thermoplastic resin (b1) as a material for a heat sealing layer.

A dispersion (solid content: 80% by mass) of thermoplastic resin particles (ethylene-methacrylic acid copolymer (EMAA) (melting point: 90°C, average particle size: 0.07 $\mu$m)) and 20% by mass of the methacrylic acid-based copolymer (acrylic copolymer having a polar group (having no melting point)) obtained in Production Example 1 were mixed to prepare a thermoplastic resin (c1) as a material (solid) for a coating layer.

The thermoplastic resin composition (a1) was melt-kneaded in an extruder set to 230°C, then supplied to an extrusion die set to 250°C, and extruded into a sheet. Subsequently, the extrudate was cooled in a cooling apparatus, and the obtained unstretched sheet was heated to 140°C and stretched 4-fold in the MD direction to obtain a 4-fold stretched film.

Next, the thermoplastic resin (b1) was melt-kneaded in another extruder set to 230°C and then co-extruded into a sheet, which was then laminated onto the 4-fold stretched film.

A laminate film having a two-layer structure of 4-fold stretched film/thermoplastic resin composition (b1) was thereby obtained. The laminate film was cooled to 60°C, heated again to approximately 140°C using a tenter oven, and stretched 10-fold in the TD direction. The stretched film was heat-treated in a heat setting zone adjusted to 160°C, then cooled to 60°C, and trimmed on its edges.

The resin composition (b1) after stretching was coated with a coating solution of the resin composition (c1) for coating layer formation using a bar coater. Subsequently, the resultant was dried in an oven having a length of 10 m at a drying temperature set to 80°C.

A laminate of Example 1 having a three-layer structure of substrate layer/heat sealing layer/coating layer laminated in this order (composition: a1/b1/c1, thickness: 75 $\mu$m/5 $\mu$m/0.15 $\mu$m, the number of stretching axes: biaxial/monoaxial/-) and a total thickness of 80.15 $\mu$m was thereby obtained.

<Production of labeled container>

The laminate was cut out into a sheet-like form, which was then punched out into an 8 cm $\times$ 6 cm rectangle to prepare a sample for evaluation. This sample was electrostatically charged using an electrostatic charging apparatus, and mounted in the inside of a mold for molding of a stretch blow molding machine (manufactured by Nissei ASB Machine Co., Ltd., equipment name: ASB-12M), followed by mold clamping. In this operation, the laminate was mounted such that the substrate layer was in contact with the mold (such that the coating layer faced the cavity side). The laminate was also mounted such that the long sides of the label in the mold were parallel to the circumferential direction of the barrel of the resin container. The mold was controlled such that the surface temperature on the cavity side fell within the range of 20 to 45°C.

Then, a labeled container was formed under the following molding conditions.

<Molding conditions>

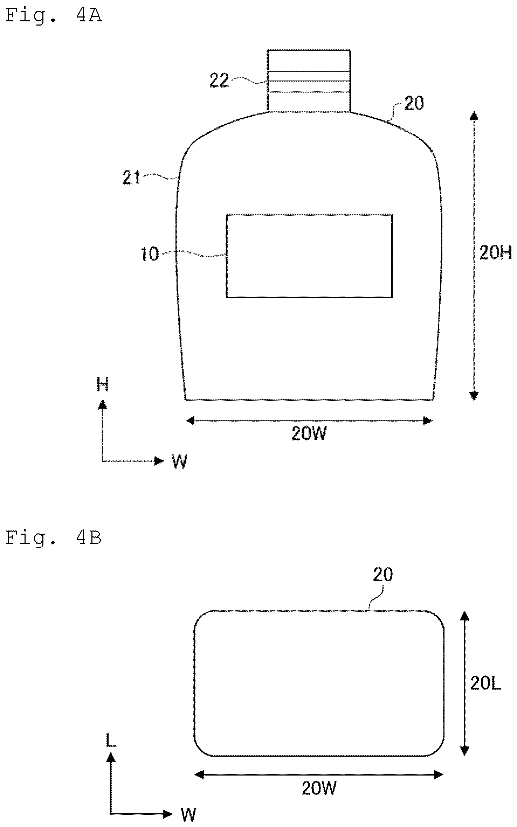

A preform of a polyethylene terephthalate resin was preheated to 98°C, led to the mold, and subjected to stretch blow molding for 6 seconds under blow pressure of 3.2 MPa. After cooling to 50°C for 5.5 seconds, the mold was opened to obtain a labeled container 20 having a square barrel portion 21, as shown in Figs. 4A and 4B. A dimension 20W in a horizontal direction W of the barrel portion was 145 mm, a dimension 20L in a longitudinal direction L was 72.5 mm, and a dimension 20H in a height direction H was 130 mm. The dimension 20H was defined as a dimension from the undersurface to the lower side of a cap mouth 22.

The draw ratio of the labeled container 20 was 1.2-fold in the horizontal direction W, 2.6-fold in the longitudinal direction L, and 1.8-fold in the height direction H. The draw ratio was determined as the ratios of the dimensions 20W, 20L, and 20H of the labeled container 20 to the respective dimensions of the preform in the horizontal direction W, the longitudinal direction L, and the height direction H. Since the barrel portion 21 of the labeled container bulged as compared with the undersurface, the dimensions 20W and 20L were determined by performing measurement at varying positions in the height direction H, and adopting an average value of the measurement values.

(Example 2)

The material for the coating layer of Example 1 was changed from the dispersion of the thermoplastic resin particles to a dispersion of thermoplastic resin particles (ethylene-methacrylic acid copolymer (EMAA) (melting point: 90°C, average particle size: 0.5 $\mu$m)), and a thermoplastic resin (c2) was prepared by the same operation as in Example 1.

A laminate of Example 2 having a three-layer structure of substrate layer/heat sealing layer/coating layer laminated in this order (composition: a1/b1/c2, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 3)

The material for the coating layer of Example 1 was changed from the dispersion of the thermoplastic resin particles to a dispersion of thermoplastic resin particles (ethylene-methacrylic acid copolymer (EMAA) (melting point: 90°C, average particle size: 0.7 $\mu$m)), and a thermoplastic resin (c3) was prepared by the same operation as in Example 1.

A laminate of Example 3 having a three-layer structure of substrate layer/heat sealing layer/coating layer laminated in this order (composition: a1/b1/c3, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 4)

As a material for the heat sealing layer of Example 1, 100% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)) was prepared as a thermoplastic resin (b2).

A laminate of Example 4 having a three-layer structure of substrate layer/heat sealing layer/coating layer laminated in this order (composition: a1/b2/c1, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 5)

As a material for the heat sealing layer of Example 1, 90% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)), and 10% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) were mixed to prepare a thermoplastic resin (b3).

A laminate of Example 5 having a three-layer structure of substrate layer/heat sealing layer/coating layer laminated in this order (composition: a1/b3/c1, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 6)

As a material for the heat sealing layer of Example 1, 50% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)), and 50% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) were mixed to prepare a thermoplastic resin (b4).

A laminate of Example 6 having a three-layer structure of substrate layer/heat sealing layer/coating layer laminated in this order (composition: a1/b4/c1, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 7)

As a material for the heat sealing layer of Example 1, 30% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)), and 70% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) were mixed to prepare a thermoplastic resin (b5).

A laminate of Example 7 having a three-layer structure of substrate layer/heat sealing layer/coating layer laminated in this order (composition: a1/b5/c1, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 8)

As a material for the heat sealing layer of Example 1, 10% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)), and 90% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) were mixed to prepare a thermoplastic resin (b6).

A laminate of Example 8 having a three-layer structure of substrate layer/heat sealing layer/coating layer laminated in this order (composition: a1/b6/c1, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Example 9)

As a material for the heat sealing layer of Example 1, 100% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) was mixed to prepare a thermoplastic resin (b7).

A laminate of Example 9 having a three-layer structure of substrate layer/heat sealing layer/coating layer laminated in this order (composition: a1/b7/c1, thickness: 75 μm/5 μm/0.15 μm, the number of stretching axes: biaxial/monoaxial/-) and a total thickness of 80.15 μm was obtained by the same operation as in Example 1 except for those described above. A labeled container was formed by the same operation as in Example 1.

(Example 10)

100% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) was mixed as a material for a first heat sealing layer to prepare a thermoplastic resin (b8).

70% by mass of a thermoplastic resin (metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$)), and 30% by mass of a thermoplastic resin (metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$)) were mixed as a material for a second heat sealing layer to prepare a thermoplastic resin (b9).

Next, the resin composition (b8) and the resin composition (b9) were each melt-kneaded in an extruder set to 230°C, then supplied to a multilayer die set to 250°C, laminated together inside the die, and co-extruded into a sheet on the 4-fold stretched film obtained in Example 1 to obtain a laminate film having a three-layer structure of substrate layer/first heat sealing layer/second heat sealing layer. The laminate film was cooled to 60°C, heated again to approximately 140°C using a tenter oven, and stretched 10-fold in the TD direction. The stretched film was heat-treated in a heat setting zone adjusted to 160°C, then cooled to 60°C, and trimmed on its edges.

The resin composition (b9) after stretching was coated with a coating solution of the resin composition (c1) for coating layer formation using a bar coater. Subsequently, the resultant was dried in an oven having a length of 10 m at a drying temperature set to 80°C.

A laminate of Example 10 having a three-layer structure of substrate layer/first heat sealing layer/second heat sealing layer/coating layer laminated in this order (composition: :a1/b8/b9/c1, thickness: 75 μm/2 μm/3 μm/0.15 μm, the number of stretching axes: biaxial/monoaxial/monoaxial/-) and a total thickness of 80.15 μm was thereby obtained.

(Comparative Example 1)

The material for the coating layer of Example 1 was changed from the thermoplastic resin particles to thermoplastic resin particles (a dispersion of an ethylene-methacrylic acid copolymer (EMAA) (melting point: 90°C, average particle size: 1.0 μm)), and a thermoplastic resin (c4) was prepared by the same operation as in Example 1.

A laminate of Comparative Example 1 having a three-layer structure of substrate layer/heat sealing layer/coating layer laminated in this order (composition: a1/b1/c4, thickness: 75 μm/5 μm/0.15 μm, the number of stretching axes: biaxial/monoaxial/-) and a total thickness of 80.15 μm was obtained by the same operation as in Example 1 except for those described above. A labeled container was formed by the same operation as in Example 1.

(Comparative Example 2)

The material for the coating layer of Example 1 was prepared as a thermoplastic resin (c5) composed of the methacrylic acid-based copolymer (acrylic copolymer having a polar group (having no melting point)) obtained in Production Example 1.

A laminate of Comparative Example 2 having a three-layer structure of substrate layer/heat sealing layer/coating layer laminated in this order (composition: a1/b1/c5, thickness: 75 μm/5 μm/0.15 μm, the number of stretching axes: biaxial/monoaxial/-) and a total thickness of 80.15 μm was obtained by the same operation as in Example 1 except for those described above. A labeled container was formed by the same operation as in Example 1.

(Comparative Example 3)

The material for the coating layer of Example 1 was prepared as a thermoplastic resin (c6) composed of a dispersion of thermoplastic resin particles (ethylene-methacrylic acid copolymer (EMAA) (melting point: 90°C, average particle size: 0.07 μm)).

A laminate of Comparative Example 3 having a three-layer structure of substrate layer/heat sealing layer/coating layer laminated in this order (composition: a1/b1/c6, thickness: 75 $\mu$m/5 $\mu$m/0.15 $\mu$m, the number of stretching axes: biaxial/monoaxial/-) and a total thickness of 80.15 $\mu$m was obtained by the same operation as in Example 1 except for those described above. A labeled container was formed by the same operation as in Example 1.

(Comparative Example 4)

No coating layer was prepared in Example 1, and a laminate of Comparative Example 4 having a two-layer structure of substrate layer/heat sealing layer laminated (composition: a1/b1, thickness: 75 $\mu$m/0.15 $\mu$m, the number of stretching axes: biaxial/monoaxial) and a total thickness of 80 $\mu$m was obtained by the same operation as in Example 1 except for those described above. A labeled container was formed by the same operation as in Example 1.

(Starting material)

Table 1 shows a list of the starting materials used in each of Examples and Comparative Examples.

[Table 1]

| | Type | Symbol | Material |
|---|---|---|---|
| Heat sealing layer | Heat sealing resin | 8402 | Metallocene-catalyzed polyethylene (trade name: Engage 8402, manufactured by The Dow Chemical Company, MFR (190°C, a load of 2.16 kg): 30 g/10 min, melting point: 97°C, density: 0.902 g/cm$^3$) |
| | | 8401 | Metallocene-catalyzed polyethylene (trade name: Engage 8401, manufactured by The Dow Chemical Company, MFR (190°C, a load of 2.16 kg): 31 g/10 min, melting point: 79°C, density: 0.885 g/cm$^3$) |
| Coating layer | Thermoplastic resin particles (Meth)acrylic acid-based copolymer | RP1 | Ethylene-methacrylic acid copolymer (EMAA) dispersion (melting point: 90°C, average particle size: 0.07 $\mu$m) |
| | | RP2 | Ethylene-methacrylic acid copolymer (EMAA) dispersion (melting point: 90°C, average particle size: 0.5 $\mu$m) |
| | | RP3 | Ethylene-methacrylic acid copolymer (EMAA) dispersion (melting point: 90°C, average particle size: 0.7 $\mu$m) |
| | | RP4 | Ethylene-methacrylic acid copolymer (EMAA) dispersion (melting point: 90°C, average particle size: 1.0 $\mu$m) |
| | | Ac1 | Acrylic copolymer having a polar group (having no melting point) obtained in Production Example 1 |
| Substrate layer | Thermoplastic resin | PP | Propylene homopolymer (trade name: NOVATEC PP FY4, manufactured by Japan Polypropylene Corp., MFR (230°C, a load of 2.16 kg): 5 g/10 min, melting point: 167°C) |

(Evaluation method)

<Thickness>

The thickness (total thickness) of the laminate was measured using a constant pressured thickness measuring instrument (trade name: PG-01J, manufactured by Teclock Corp.) in accordance with JIS K7130: 1999. The thickness of each layer in the laminate was determined as follows: a sample to be measured was cooled to a temperature of - 60°C or lower in liquid nitrogen, and the sample placed on a glass plate was cut with a razor blade (trade name: Proline Blade, manufactured by Schick Japan) put thereon at a right angle, to prepare a sample for cross-sectional observation. The cross section of the obtained sample was observed under a scanning electron microscope (trade name: JSM-6490, manufactured by JEOL Ltd.). The boundary on a thermoplastic resin composition basis of each layer was determined from appearance, and the total thickness of the laminate was multiplied by the thickness ratio of each layer observed to determine the thickness of each layer.

<Average particle size of thermoplastic resin particles>

The average particle size of the thermoplastic resin particles was determined as an average value by observing the coating layer surface under an electron microscope, and measuring the maximum diameters (circumscribed circle diameters) of ten particles.

<Area dimension change rate of laminate>

The laminate was cut out into a length of 50 mm in the MD direction and a length of 5 mm in the TD direction to prepare a sample. The prepared sample was mounted in a thermomechanical analyzer TMA7100 (manufactured by Hitachi High-Tech Science Corp.), and the sample was held with a fixture such that the measurement piece was 15 mm in TMA7100. The temperature was elevated under conditions involving a temperature range from 0 to 120°C and a temperature elevation rate of 10°C/min under a load of 49 N. A dimension in the MD direction at the temperature of 0°C before temperature elevation ($D_M0$) and a dimension in the MD direction after temperature elevation ($D_M1$) were measured. After temperature elevation, a dimension was measured at temperatures of 80°C and 90°C. In the same manner as above, the laminate was cut out into a length of 50 mm in the TD direction and a length of 5 mm in the MD direction, and dimensions in the TD direction before and after temperature elevation ($D_T0$ and $D_T1$) were measured using the resulting sample.

An area dimension change rate $K_{10}$ (%) at the temperatures of 80°C and 90°C was determined from the measurement value of each dimension according to the expression given below. The area dimension change rate $K_{10}$ (%) has a negative symbol when the sample shrinks after temperature elevation, and has positive symbol when the sample is inflated.

$$\text{Area dimension change rate } K_{10} \ (\%) =$$

$$(D_M0 \times D_T0 - D_M1 \times D_T1) \ / \ (D_M0 \times D_T0) \times 100$$

<Fusion rate of heat sealing layer>

5 mg of the heat sealing layer was sampled and loaded in a differential scanning calorimeter DSC7000X (manufactured by Hitachi High-Tech Science Corp.). In this differential scanning calorimeter, a heating/cooling/heating cycle was carried out at a scanning rate of 10 m/min in a temperature range from - 60°C to 200°C to obtain a DSC curve. Total fusion heat of the heating step and fusion heat at each temperature of 80°C, 90°C, and 100°C were determined from the DSC curve of the second heating step, and the fusion heat at each temperature was divided by the total fusion heat of the heating step to determine a fusion rate.

<Fusion heat rate of heat sealing layer>

A DSC curve was obtained in the same manner as above. A total endothermic peak area $S_T$ of the DSC curve of the second heating step was measured. An endothermic peak area $S_{80}$ at 80°C or lower was measured, and a fusion heat rate at 80°C was calculated according to the following expression.

$$\text{Fusion heat rate} = S_{80} \ / \ S_T \times 100$$

<Tack force>

A sample of the laminate was loaded in a tacking tester (TAC-II) (manufactured by RHESCA Co., Ltd.). A stainless probe of $\phi$5 mm in diameter heated to a predetermined temperature was pressed against the surface on the side contacted with the resin container of the laminate under a load of 10 N for 30 seconds, and a tack force ($N/cm^2$) was measured with the tester when the laminate was pulling out at a pulling rate of 30 m/min 1 minute later.

<Haze value>

A haze value was measured using a haze meter (manufactured by Nippon Denshoku Industries Co., Ltd., trade name: NDH2000) in accordance with JIS-K-7136: 2000.

<Area dimension change rate of resin container>

As shown in Figs. 4A and 4B, a cut piece of 50 mm in the horizontal direction W and 5 mm in the vertical direction H was taken from a region that resided on a surface on the side opposite to a label 1-attached surface of the barrel portion 21 of the labeled container 20 and at the same positions in the horizontal direction W and the height direction H as those of the label 1-attached region, to prepare a sample. A dimension in the horizontal direction W at the temperature of 0°C before temperature elevation ($D_W 0$) and a dimension in the horizontal direction W after temperature elevation ($D_W 1$) were measured in the same manner as in the area dimension change rate $K_{10}$ of the laminate using this sample. After temperature elevation, a dimension was measured at each temperature of 75°C, 80°C, and 90°C. In the same manner as above, the labeled container 20 was cut out into a length of 50 mm in the vertical direction H and a length of 5 mm in the horizontal direction W, and dimensions in the vertical direction H before and after temperature elevation ($D_H 0$ and $D_H 1$) were measured using the resulting sample.

An area dimension change rate $K_{30}$ (%) at each temperature of 75°C, 80°C, and 90°C was determined from the measurement value of each dimension according to the expression given below. The area dimension change rate $K_{30}$ (%) has a negative symbol when the sample shrinks after temperature elevation, and has positive symbol when the sample is inflated.

$$\texttt{Area dimension change rate } K_{30} \texttt{ (\%) =}$$

$$(D_W 0 \times D_H 0 - D_W 1 \times D_H 1) / (D_W 0 \times D_H 0) \times 100$$

<Label separation rate>

The label and the resin container in the label portion of the labeled container of each of Examples and Comparative Examples were integrally cut out with a cutter. A mass (Ta) of the cut out labeled container was measured. This label portion was crushed into flakes using a crusher (manufactured by Morita Seiki K.K., product name: XL-15, mesh screen size: 8 mm$\phi$) to prepare a sample for evaluation. The sample was added to a constant-temperature water bath that maintained a water temperature of 75°C, 80°C, or 90°C, and dipped therein for 10 minutes with stirring. The sample was taken out of the high-temperature water and thoroughly dried. Likewise, the sample was added to a constant-temperature water bath that maintained an alkali solution (sodium hydroxide solution) temperature of 80°C or 90°C and dipped therein for 10 minutes with stirring (high-temperature dipping step). The sample was taken out of the high-temperature alkali solution, neutralized, and then washed with water. The label and resin the container suspended in the water were recovered, and a total mass (Tb) of the recovered label and resin container was measured. Then, the label was completely removed from the resin container, and a mass (B) of the remaining resin container was measured. A (specific gravity) separation rate (%) of the label was calculated according to the following expression from the mass of the label before dipping and the mass of the label that was removed and permitted specific gravity separation after dipping.

Label separation rate (%) = (Ta - Tb) / (Ta - B) $\times$ 100

<Adhesive strength of in-mold label to resin container>

The surface on the substrate layer side of the laminate obtained in each of Examples and Comparative Examples was provided with a printed layer by printing a pictorial pattern including letters (MS Gothic, 6 to 20 point) using a flexographic printer (manufactured by MT Tech Co., Ltd., equipment name: FC11B) and UV ink for flexography (manufactured by T&K TOKA Corp., product name: FLEXO 500).

The printed layer was coated with the coating solution for a protective layer obtained in Production Example 2 using a gravure roll, and irradiated with an ultraviolet lamp at an energy of 800 J so that the coating solution for a protective layer was cured to form a protective layer. An in-mold label was thereby obtained. The thickness of the protective layer thus cured was 2.5 $\mu$m.

The obtained in-mold label was cut out into a sheet-like form immediately after preparation and punched out into a rectangle having a long side of 8 cm and a short side of 6 cm to prepare each sample (A) for evaluation. Aside from this, the obtained in-mold label was wound in a roll to create a state in which the surface of the protective layer serving as one outermost layer was in contact with the surface of the coating layer serving as the other outermost layer. The resultant was left standing for 8 days in an environment having a temperature of 25°C and a relative humidity of 50%. Then, the in-mold label in a roll was rolled out, cut out into a sheet-like form, and punched out into a rectangle having a long side of 8 cm and a short side of 6 cm to prepare each sample (B) for evaluation.

The punched-out in-mold label was electrostatically charged using an electrostatic charging apparatus, and subsequently mounted in the inside of a mold for molding of a stretch blow molding machine (manufactured by Nissei ASB Machine Co., Ltd., equipment name: ASB-70DPH), followed by mold clamping. This mounting was performed such that the protective layer was in contact with the mold (such that the coating layer faced the cavity side). The in-mold label was also mounted such that the long sides of the label in the mold were parallel to the circumferential direction of the barrel of the resin container. The mold was controlled such that the surface temperature on the cavity side fell within the range of 20 to 45°C.

Meanwhile, a preform made of a polyethylene terephthalate resin was preheated to 100°C. Subsequently, the preform was led to the mold and subjected to stretch blow molding for 6 seconds under blow pressure of 3.2 MPa. Then, the mold was cooled to 50°C for 5.5 seconds.

Next, the mold was opened to obtain a labeled container having a square barrel portion having a height of 12 cm and a side of approximately 7 cm.

The obtained labeled container was stored for 2 days in an environment having a temperature of 23°C and a relative humidity of 50%. Subsequently, the label and the resin container in the label portion of the labeled container were integrally cut out with a cutter. A total of six samples for measurements having a length of 12 cm (8 cm label-affixed portion and 4 cm non-affixed portion) and a width of 1.5 cm (the label was affixed throughout the width) with the circumferential direction of the barrel of the container defined as a longitudinal direction were collected from two containers.

Next, the label-affixed portion was carefully peeled from the non-affixed portion and peeled by approximately 1 cm to form a tab. Subsequently, the tab and a 1.5 cm wide PET film (thickness: 50 $\mu$m) were stacked and bonded to each other through a pressure-sensitive adhesive so that a tab portion on the label side was formed to prepare a sample for adhesive strength measurement.

A 180-degree peel test between the container barrel portion and the label was conducted under conditions involving a peeling rate of 300 mm/min using a tensile tester (manufactured by Shimadzu Corp., model name: Autograph AGS-5kNJ) on the basis of JIS K6854-2: 1999. An average value of peel forces from peeling lengths of 25 to 75 mm was measured, and a value obtained by further averaging six measurement values from each sample was regarded as adhesive strength. The unit of the adhesive strength was N/15 mm.

Tables 2 to 4 show evaluation results. In Tables 2 to 4, a water-soluble binder is described as "binder" for the sake of convenience. All the porosities of the substrate layers in Examples and Comparative Examples were 0%.

[Table 2]

| Configuration | Details | Composition | | Example | | | | | | | | |
|---|---|---|---|---|---|---|---|---|---|---|---|---|
| | | | | 1 | 2 | 3 | 4 | 5 | 6 | 7 | 8 | 9 |
| | Substrate layer | PP | [% by mass] | 100 | 100 | 100 | 100 | 100 | 100 | 100 | 100 | 100 |
| | | The number of stretching axes | | 2 | 2 | 2 | 2 | 2 | 2 | 2 | 2 | 2 |
| | Heat sealing layer | 8402 | [% by mass] | 70 | 70 | 70 | 100 | 90 | 50 | 30 | 10 | 0 |
| | | 8401 | [% by mass] | 30 | 30 | 30 | 0 | 10 | 50 | 70 | 90 | 100 |
| | | The number of stretching axes | | 1 | 1 | 1 | 1 | 1 | 1 | 1 | 1 | 1 |
| | | Thickness | [μm] | 5 | 5 | 5 | 5 | 5 | 5 | 5 | 5 | 5 |
| | Coating layer | RP1 | [% by mass] | 80 | 0 | 0 | 80 | 80 | 80 | 80 | 80 | 80 |
| | | RP2 | [% by mass] | 0 | 80 | 0 | 0 | 0 | 0 | 0 | 0 | 0 |
| | | RP3 | [% by mass] | 0 | 0 | 80 | 0 | 0 | 0 | 0 | 0 | 0 |
| | | RP4 | [% by mass] | 0 | 0 | 0 | 0 | 0 | 0 | 0 | 0 | 0 |
| | | Ac1 | [% by mass] | 20 | 20 | 20 | 20 | 20 | 20 | 20 | 20 | 20 |
| | | Thickness | [μm] | 0.15 | 0.15 | 0.15 | 0.15 | 0.15 | 0.15 | 0.15 | 0.15 | 0.15 |

(continued)

| Configuration | Details | Composition | | Example | | | | | | | | |
|---|---|---|---|---|---|---|---|---|---|---|---|---|
| | | | | 1 | 2 | 3 | 4 | 5 | 6 | 7 | 8 | 9 |
| Evaluation | Area dimension change rate $K_{10}$ [%]of laminate | | 80°C | -1 | -1 | -1 | -1 | -1 | -1 | -1 | -1 | -1 |
| | | | 90°C | -1 | -1 | -1 | -1 | -1 | -1 | -1 | -1 | -1 |
| | Heat sealing layer fusion rate [%] | | 80°C | 60.1 | 60.1 | 60.1 | 51 | 54 | 66.2 | 72.2 | 78.3 | 81 |
| | | | 90°C | 70.5 | 70.5 | 70.5 | 61 | 64.2 | 76.8 | 83.1 | 89.4 | 93 |
| | | | 100°C | 80 | 80 | 80 | 96 | 90 | 85 | 90 | 95 | 98 |
| | Tack force [N/cm2] | | 80°C | 0.1 | 0.1 | 0.1 | 0.09 | 0.1 | 0.1 | 0.2 | 0.2 | 0.2 |
| | | | 90°C | 0.3 | 0.3 | 0.3 | 0.2 | 0.2 | 0.5 | 0.6 | 0.7 | 0.8 |
| | | | 100°C | 0.7 | 0.7 | 0.7 | 0.6 | 0.6 | 0.8 | 0.8 | 0.9 | 0.9 |
| | Fusion heat rate at 80°C | | | 60.1 | 60.1 | 60.1 | 51 | 54 | 66.2 | 72.2 | 78.3 | 81 |
| | Haze value | | | 50 | 55 | 60 | 50 | 50 | 50 | 50 | 50 | 50 |
| | Adhesive strength [gf/15 mm] to container | | | 500 | 480 | 470 | 380 | 420 | 430 | 470 | 500 | 550 |
| | Area dimension change rate $K_{30}$ [%] of resin container | | 75°C | 8.1 | 8.1 | 8.1 | 8.1 | 8.1 | 8.1 | 8.1 | 8.1 | 8.1 |
| | | | 80°C | 12.6 | 12.6 | 12.6 | 12.6 | 12.6 | 12.6 | 12.6 | 12.6 | 12.6 |
| | | | 90°C | 28.7 | 28.7 | 28.7 | 28.7 | 28.7 | 28.7 | 28.7 | 28.7 | 28.7 |
| | Label separation rate [%] | 75°C water | | 100 | 100 | 100 | 100 | 100 | 85 | 80 | 70 | 40 |
| | | 80°C water | | 100 | 100 | 100 | 100 | 100 | 90 | 85 | 75 | 50 |
| | | 90°C water | | 100 | 100 | 100 | 100 | 100 | 90 | 90 | 80 | 60 |
| | | 80°C aqueous NaOH solution | | 100 | 100 | 100 | 100 | 100 | 95 | 90 | 85 | 70 |
| | | 85°C aqueous NaOH solution | | 100 | 100 | 100 | 100 | 100 | 95 | 90 | 85 | 70 |

[Table 3]

| Configuration | Details | Composition | | Comparative Example | | | |
|---|---|---|---|---|---|---|---|
| | | | | 1 | 2 | 3 | 4 |
| Evaluation | Substrate layer | PP | [% by mass] | 100 | 100 | 100 | 100 |
| | | The number of stretching axes | | 2 | 2 | 2 | 2 |
| | Heat sealing layer | 8402 | [% by mass] | 70 | 70 | 70 | 70 |
| | | 8401 | [% by mass] | 30 | 30 | 30 | 30 |
| | | The number of stretching axes | | 1 | 1 | 1 | 1 |
| | | Thickness | [μm] | 5 | 5 | 5 | 5 |
| | Adhesivenessenhancing layer | RP1 | [% by mass] | 0 | 0 | 100 | - |
| | | RP2 | [% by mass] | 0 | 0 | 0 | - |
| | | RP3 | [% by mass] | 0 | 0 | 0 | - |
| | | RP4 | [% by mass] | 80 | 0 | 0 | - |
| | | Ac1 | [% by mass] | 20 | 100 | 0 | - |
| | | Thickness | [μm] | 0.15 | 0.15 | 0.15 | - |
| | Area dimension change rate $K_{10}$ [%] of laminate | | 80°C | -1 | -1 | -1 | -1 |
| | | | 90°C | -1 | -1 | -1 | -1 |
| | Heat sealing layer fusion rate [%] | | 80°C | 60.1 | 60.1 | 60.1 | 60.1 |
| | | | 90°C | 70.5 | 70.5 | 70.5 | 70.5 |
| | | | 100°C | 80 | 80 | 80 | 80 |
| | Tack force **[N/cm2]** | | 80°C | 0.1 | 0.1 | 0.1 | 0.1 |
| | | | 90°C | 0.3 | 0.3 | 0.3 | 0.3 |
| | | | 100°C | 0.7 | 0.7 | 0.7 | 0.7 |
| | Fusion heat rate | | | 60.1 | 60.1 | 60.1 | 60.1 |
| | Haze value | | | 80 | 30 | 40 | 40 |
| | Adhesive strength [gf/15 mm] to container | | | 450 | 200 | 50 | 20 |
| | Area dimension change rate $K_{30}$ [%] of resin container | | 75°C | 8.1 | 8.1 | 8.1 | 8.1 |
| | | | 80°C | 12.6 | 12.6 | 12.6 | 12.6 |
| | | | 90°C | 28.7 | 28.7 | 28.7 | 28.7 |
| | Label separation rate [%] | 75°C water | | 100 | 100 | 100 | 100 |
| | | 80°C water | | 100 | 100 | 100 | 100 |
| | | 80°C water | | 100 | 100 | 100 | 100 |
| | | 80°C aqueous NaOH solution | | 100 | 100 | 100 | 100 |
| | | 85°C aqueous NaOH solution | | 100 | 100 | 100 | 100 |

[Table 4]

| Configuration | Details | Composition | | Example |
|---|---|---|---|---|
| | | | | 10 |
| | Substrate layer | PP | [% by mass] | 100 |
| | | The number of stretching axes | | 2 |
| | First heat sealing layer | 8402 | [% by mass] | 0 |
| | | 8401 | [% by mass] | 100 |
| | | The number of stretching axes | | 1 |
| | | Thickness | [μm] | 2 |
| | Second heat sealing layer | 8402 | [% by mass] | 70 |
| | | 8401 | [% by mass] | 30 |
| | | The number of stretching axes | | 1 |
| | | Thickness | [μm] | 3 |
| | Coating layer | RP1 | [% by mass] | 80 |
| | | RP2 | [% by mass] | 0 |
| | | RP3 | [% by mass] | 0 |
| | | RP4 | [% by mass] | 0 |
| | | Ac1 | [% by mass] | 20 |
| | | Thickness | [μm] | 0.15 |
| Evaluation | Area dimension change rate $K_{10}$ [%] of laminate | 80°C | | -1 |
| | | 90°C | | -1 |
| | First heat sealing layer fusion rate [%] | 80°C | | 68.5 |
| | | 90°C | | 79.3 |
| | | 100°C | | 97 |
| | Tack force **[N/cm2]** | 80°C | | 0.1 |
| | | 90°C | | 0.7 |
| | | 100°C | | 0.8 |
| | Fusion heat rate at 80°C | | | 68.5 |
| | Haze value | | | 50 |
| | Adhesive strength [gf/15 mm] to container | | | 530 |
| | Area dimension change rate $K_{30}$ [%] of resin container | 75°C | | 8.1 |
| | | 80°C | | 12.6 |
| | | 90°C | | 28.7 |
| | | 75°C water | | 100 |
| | | 80°C water | | 100 |
| | Label separation rate [%] | 90°C water | | 100 |
| | | 80°C aqueous NaOH solution | | 100 |
| | | 85°C aqueous NaOH solution | | 100 |

As shown in Tables 2 and 4, Examples 1 to 10 all had sufficient adhesive strength of the in-mold label to the container even if silicone was transferred from the protective layer, and also had a haze value of 60 or less, and therefore achieved the object to provide a laminate that enhances the adhesiveness of the in-mold label to the container, and furthermore has transparency.

By contrast, as shown in Table 3, in Comparative Example 1, the average particle size of the thermoplastic resin particles contained in the coating layer exceeded 0.8 $\mu$m, and the haze value was elevated to increase opacity, resulting in aesthetic impairment. In Comparative Example 2, the coating layer did not contain the thermoplastic resin particles themselves and contained only the (meth)acrylic acid-based copolymer, resulting in reduction in adhesive strength to the container. On the other hand, in Comparative Example 3, the coating layer contained the thermoplastic resin particles and however, contained no (meth)acrylic acid-based copolymer, resulting in reduction in adhesive strength to the container. Comparative Example 4 had the lowest adhesive strength because no coating layer was established.

These results demonstrated that a laminate comprising a substrate layer, a heat sealing layer, and a coating layer, wherein the coating layer comprises thermoplastic resin particles and a (meth)acrylic acid-based copolymer, the thermoplastic resin particles have an average particle size of 0.01 to 0.80 $\mu$m, and the (meth)acrylic acid-based copolymer has a polar group, provides a laminate having adhesiveness to a resin container and furthermore having transparency.

The present application claims the priority based on Japanese Patent Application No. 2023-027072 which is a Japanese patent application filed on February 24, 2023, and the contents described in the Japanese patent application are incorporated herein by reference in their entirety.

Reference Sings List

1: laminate
2: substrate layer
4: heat sealing layer
6: coating layer

**Claims**

1. A laminate comprising a substrate layer, a heat sealing layer, and a coating layer, wherein

    the coating layer comprises thermoplastic resin particles and a (meth)acrylic acid-based copolymer,
    wherein the thermoplastic resin particles have an average particle size of 0.01 to 0.80 $\mu$m, and
    wherein the (meth)acrylic acid-based copolymer has a polar group.

2. The laminate according to claim 1, wherein the average particle size of the thermoplastic resin particles is 0.01 to 0.45 $\mu$m.

3. The laminate according to claim 1 or 2, wherein a haze value is 60% or less.

4. The laminate according to claim 1 or 2, wherein the (meth)acrylic acid-based copolymer has a primary to tertiary amino group.

5. The laminate according to claim 1 or 2, wherein the (meth)acrylic acid-based copolymer has a melting point of lower than 60°C or has no melting point.

6. The laminate according to claim 1, wherein

    the laminate is used by adhering to a resin container which is a stretch blow-molded body, wherein
    an absolute value of an area dimension change rate at 80°C is 1% or less, and
    a tack force at 80°C is 0.8 N/cm$^2$ or less.

7. The laminate according to claim 6, wherein a tack force at 90°C is less than 1.2 N/cm$^2$.

8. The laminate according to claim 6 or 7, wherein a fusion heat rate at 80°C of a heat sealing resin in the heat sealing layer is 80% or less.

9. The laminate according to claim 6 or 7, wherein

the heat sealing layer comprises a first heat sealing resin and a second heat sealing resin,
a melting point of the first heat sealing resin is 75 to 85°C, and
a melting point of the second heat sealing resin is 95 to 105°C.

Fig. 1

Fig. 2A

Fig. 2B

Fig. 3

```
        ┌──────────┐
        │  Start   │
        └────┬─────┘
             │
             ▼
 ┌───────────────────────┐
 │                       │── S101
 └───────────┬───────────┘
             │
             ▼
 ┌───────────────────────┐
 │                       │── S102
 └───────────┬───────────┘
             │
             ▼
 ┌───────────────────────┐
 │                       │── S103
 └───────────┬───────────┘
             │
             ▼
        ┌──────────┐
        │  Finish  │
        └──────────┘
```

Fig. 4A

Fig. 4B

## INTERNATIONAL SEARCH REPORT

| International application No. |
| --- |
| **PCT/JP2024/006511** |

### A. CLASSIFICATION OF SUBJECT MATTER

*B32B 27/00*(2006.01)i; *B32B 27/20*(2006.01)i; *B32B 27/30*(2006.01)i
FI:    B32B27/00 E; B32B27/20 Z; B32B27/30 A

According to International Patent Classification (IPC) or to both national classification and IPC

### B. FIELDS SEARCHED

Minimum documentation searched (classification system followed by classification symbols)

B32B27/00; B32B27/20; B32B27/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/193852 A1 (YUPO CORP.) 30 September 2021 (2021-09-30) entire text | 1-9 |
| A | WO 2020/067327 A1 (YUPO CORP.) 02 April 2020 (2020-04-02) entire text | 1-9 |
| A | WO 2007/023843 A1 (YUPO CORP.) 01 March 2007 (2007-03-01) entire text | 1-9 |
| A | JP 2007-176116 A (JAPAN POLYETHYLENE CORP.) 12 July 2007 (2007-07-12) entire text | 1-9 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **09 May 2024** | **21 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

| International application No. |
|---|
| **PCT/JP2024/006511** |

| Patent document cited in search report | Publication date (day/month/year) | Patent family member(s) | Publication date (day/month/year) |
|---|---|---|---|
| WO 2021/193852 A1 | 30 September 2021 | US 2023/0121482 A1 | |
| WO 2020/067327 A1 | 02 April 2020 | US 2021/0394495 A1 | |
| | | EP 3859718 A1 | |
| | | KR 10-2021-0038688 A | |
| | | CN 112771597 A | |
| | | TW 202023792 A | |
| WO 2007/023843 A1 | 01 March 2007 | US 2008/0280113 A1 | |
| | | EP 1938968 A1 | |
| | | CN 101247954 A | |
| JP 2007-176116 A | 12 July 2007 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004136486 A
- JP 2018060185 A
- WO 2020067327 A
- JP 2023027072 A